# EUROPEAN PATENT APPLICATION

(11) **EP 2 469 165 A1**
(43) Date of publication of application: **27.06.2012**
(21) Application number: 10306477.0
(22) Date of filing: 21.12.2010
(51) Int. Cl.: F23C 7/00, F23L 7/00, F23L 13/04, F23L 15/00, F16K 11/085

(54) **Oxidant dispatching device and use thereof**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Duperray, Pascal, 78180 Montigny Le Bretonneux (FR); Grand, Benoit, 78000 Versailles (FR); Joumani, Youssef, 78121 Crespieres (FR); Mulon, Jacques, 91300 Massy (FR); Panier, Faustine, 78350 Jouy en Josas (FR); Constantin, Gabriel, 78530 Buc (FR); Tsiava, Rémi, 91250 Saint Germain-Les-Corbeil (FR)
(74) Representative: De Vleeschauwer, Natalie Y.L.D.

(57) **Abstract**

Dispatching device (1) for supplying an oxidant, in particular a combustion oxidant to a burner, and furnace equipped therewith, said oxidant dispatching comprising multiple spaced apart oxidant outlets (10), whereby, by means of a rotatable shaft onto which at least one slide valve (30) is mounted said slide valve (30) can be positioned over a corresponding oxidant outlet (10) so as to partially or totally close off same.

## Description

The present invention relates to an oxidant dispatching device and its use for dividing an incoming flow of oxidant into several outgoing oxidant flows. The invention relates in particular to an oxidant dispatching device suitable for dividing an incoming flow of oxygen-rich oxidant or oxygen and more particularly of preheated oxygen-rich oxidant or oxygen.

The use of substantially pure oxygen (≥ 90%vol O₂) instead of air in the combustion processes used in industrial furnaces is today recognized as an efficient option for reducing pollutant levels, fuel consumption and CO₂ footprint. Combustion processes in which an oxidant having an oxygen content of at least 90%vol is used for combustion with fuel is hereafter referred to as oxy-combustion and the corresponding burner is likewise referred to as an oxy-burner. The terms air-combustion and air-burners, as used herein, refer to combustion processes using air as the oxidant for combustion with fuel and the corresponding burners. The terms oxygen-enriched combustion and oxygen-enriched burners, as used herein, refer to combustion processes using an oxidant having an oxygen content between 28% and 90%vol.

It is known in the art to use an oxy-burner comprising a refractory ceramic burner block or an assembly of refractory ceramic burner blocks and metallic parts. Metallic parts are inter alia used for transporting oxygen flows to the burner and into the burner block(s) prior to its injection into the combustion zone of the industrial furnace. Such oxygen burners are notably commercialized by the applicant under the commercial denominations ALGLASS^{™} FC and ALGLASS^{™} SUN.

One advantage of oxy-combustion is that it reduces NOx levels when compared with air-combustion, due to the absence of significant amounts of nitrogen in the oxidant. However, NOx are generally still produced by the oxy-combustion process due to parasitic air inlets in the industrial furnace, nitrogen contained in the fuel and/ residual nitrogen contained in the oxidant.

In order further to reduce NOx generation by oxy-combustion processes, it is known, for example from WO-A-02081967, to introduce the oxidant and the fuel separately into the combustion zone of the furnace and furthermore to stage the oxidant flows into the combustion zone, i.e. to divide oxidant required for combustion into separate oxidant flows injected into the combustion zones at increasing distances from the point of fuel injection.

A highly successful example of this concept is the above-mentioned ALGLASS^{™} SUN burner commercialized by the applicant.

In order further to increase the efficiency of oxy-combustion processes, it has been proposed to preheat the oxidant, and optionally also the fuel, upstream of the burner.

A two-step process for preheating the oxidant for oxy-combustion is known from WO-A-2007023238, which relates in particular to the field of glass-melting furnaces. It is in particular known therefrom to heat air by means of the hot furnace flue gases and subsequently to preheat the oxidant and/or the fuel for oxy-combustion by heat exchange between the hot air and the fuel and/or oxygen-rich oxidant.

As explained in the applicant's earlier patent application FR-A-2906867, it is desirable, in a staged combustion process, to be able to change the distribution of the oxidant between the respective oxidant flows (e.g. between the primary, secondary and tertiary oxidant flows, or between the secondary and tertiary oxidant flows).

Means, such as valves, necessary and suitable thereto are known and commercially available when the oxidant is an oxygen-rich oxidant or oxygen which has not been preheated prior to its introduction into the burner and which is therefore at substantially ambient temperature. However, due to, the higher temperatures, the particularly corrosive nature of preheated oxygen to the materials used and the increased risk of ignition, these known means are not suited for the distribution of preheated oxygen-rich oxidant or oxygen in a way which easily, safely and reliably permits to vary the distribution of the preheated oxidant between different preheated oxidant flows.

In consequence thereof, it has been proposed in FR-A-2906867 to divide the oxidant into different oxidant flows prior to preheating, for example by means of a division system as described in FR2863678, and only thereafter to preheat the individual oxidant flows in separate heat exchange-pipes. Such a method enables easily and safely to vary the distribution of preheated oxygen-rich oxidant between different oxidant flows, however, variations in the distribution of the oxidant between the different oxidant flows may lead to the occurrence of variations in the temperature to which the different oxidant flows are preheated prior to their introduction into the burner.

The present invention relates firstly to a particularly robust oxidant dispatching device, and in particular to such a robust oxidant dispatching device suitable for distributing an oxygen-rich oxidant and even a preheated oxygen-rich oxidant over different oxidant flows, further allowing variations in said distribution of the oxidant over the different oxidant flows.

The oxidant dispatching device according to the present invention comprises a substantially cylindrical header body, a rotatable shaft and at least one slide valve.

The cylindrical header body has a cylindrical outer wall and defines a cylinder axis in the longitudinal direction of the cylindrical header body and a length L measured along said cylinder axis.

The cylindrical outer wall comprises, at different positions in the longitudinal direction of the header body, at least one oxidant inlet aperture (hereafter referred to as 'header inlet aperture' or simply 'inlet aperture') and at least two spaced-apart oxidant outlet apertures (hereafter referred to as 'header outlet apertures' or simply 'outlet aperture'). Generally, no outlet aperture will be positioned directly opposite an inlet aperture (as seen in the direction of the corresponding inlet flow of oxidant).

The rotatable shaft of the oxidant dispatching device is positioned along the cylinder axis.

The one or more slide valves are mounted onto said rotatable shaft so as to rotate with the shaft around the cylinder axis.

Each said slide valve is positioned in a cylindrical section of the header body which comprises at least one outlet aperture in the cylindrical outer wall. Each slide valve furthermore has an outer surface matching the inner surface of the cylindrical outer wall.

By rotating the rotatable shaft, each slide valve can be positioned over at least one header outlet aperture of the cylindrical section in which the valve is positioned so as to partially or totally close off said header outlet aperture with its outer surface.

The oxidant dispatching device preferably has a single header inlet aperture.

The oxidant dispatching device may comprise a single slide valve. In that case, the slide valve will typically be positioned within the header body so as to make it possible to close off all of the outlet apertures or all outlet apertures barring one.

The oxidant dispatching device of the invention advantageously comprises a multitude of the slide valves, each slide valve being capable of partially or totally shutting off one or more header outlet apertures. In that case, each of said slide valves is preferably positioned in a cylindrical section of the header body comprising only a single header outlet aperture, so that each slide valve is capable of totally or partially closing off said single header outlet aperture of the corresponding cylindrical section. In particular, the oxidant dispatching device may comprise one slide valve per header outlet aperture, so that each one of said outlet apertures can be partially or totally closed off by a slide valve.

According to one embodiment of the invention, the axial position of the rotatable shaft can be varied continuously.

According to a particularly robust embodiment of the oxidant dispatching device, the device presents a number of distinct predetermined axial rest positions for the rotatable shaft. The rotatable shaft may, for example, be equipped with a cam and a cam follower or other mechanical means for positioning or temporarily locking the rotatable shaft in the respective predetermined axial rest positions.

The dispatching device may be equipped with a control device for automated rotation of the rotatable shaft. It may also be equipped for manual rotation of the rotatable shaft, for example by means of a handle (connected to said shaft) which can be securely positioned in one of the predetermined rest positions. The device is advantageously equipped for both automated and manual rotation of the shaft, for example to allow the operator to manually override the automatic axial positioning of the rotatable shaft.

When the rotatable shaft is equipped for manual operation, thermal insulation and/or cooling means can be provided on the rotatable shaft between the header body and the handle and/or the handle itself can be cooled and/or thermally insulated. In this manner, when the oxidant dispatching device is used to distribute preheated oxidant over different oxidant flows, safe manual rotation of the rotatable shaft remains possible.

The outer surface of the at least one slide valve can be a complete cylindrical surface. To save on material and weight, the outer surface of the at least one slide valve may instead correspond to a cylinder segment.

When the outer surface of the slide valve is a cylinder, said outer surface comprises at least one opening. When a header outlet aperture is completely covered by the slide valve's outer surface away from an opening, said header outlet aperture is completely closed off by the slide valve. When an opening in the outer surface of a slide valve overlaps a header outlet aperture, said outlet aperture is either completely open (when the header outlet aperture is entirely overlapped by the opening in the outer surface of the slide valve) or partially open and partially closed (when the header outlet aperture is only partially overlapped by the opening in the outer surface of the slide valve). By providing several openings of different sizes in the outer surface of a slide valve, it is thus possible, with a single slide valve, to completely close off and to completely open a header outlet aperture, as well as to partially close off said header outlet aperture, or even to partially close said header outlet aperture to different degrees (e.g. 25% closed, 50% closed, 75% closed), when correspondingly differently sized openings are provided in the outer surface of the slide valve.

The same effect can be achieved with an opening in the outer surface of the slide valve with a variable width in the direction cylinder axis: the narrower the width of the opening where it overlaps the header outlet aperture, the greater the degree to which said outlet aperture is closed off.

The openings in the outer surface of a slide valve intended to partially close off a header oxidant outlet aperture when the opening in the outer surface of the slide valve is positioned over the header oxidant outlet aperture are preferably calibrated openings, i.e. the cross-section of the opening is specifically dimensioned as a function of the degree to which the header outlet aperture is to be blocked off or, in other words, as a function of the degree to which the oxidant flow through the header outlet aperture is to be restricted.

An outer surface of a slide valve corresponding to a cylinder segment (as opposed to a complete cylinder) can likewise be provided with one or more openings for leaving an oxidant outlet aperture completely open and/or only partially closed off.

It will however, be appreciated that, when the outer surface of a slide valve is a cylinder segment, an opening in said outer surface is not strictly necessary for the total or partial opening of a header outlet aperture as the total opening of a header outlet aperture can be achieved by rotating the slide valve so that its outer surface does not overlap the outlet aperture and a partial opening of the outlet aperture can be achieved by rotating the slide valve so that its outer surface partially overlaps the outlet aperture.

According to a preferred embodiment of the invention, the header body is symmetrical with respect to a symmetry plane perpendicular to the cylinder axis, i.e. the header body presents a mirror-symmetry with respect to said plane, in particular with respect to the position of the one of more header inlet apertures and the multitude of header outlet apertures.

For an even oxidant distribution in the cylindrical header body, the at least one header inlet aperture is advantageously positioned in the middle of the header body, the middle being measured in the longitudinal direction of said header body. The header outlet apertures are preferably positioned symmetrically in the longitudinal direction with respect to the at least one header inlet aperture.

As mentioned above, the cylindrical header body usefully has a single header inlet aperture.

For many industrial uses of the oxidant dispatching device according to the invention, the cylindrical header body comprises at least two outlet apertures on either side of the at least one inlet aperture (i.e. at least two on the left and at least two on the right in the longitudinal direction), and generally not more than four outlet apertures on either side of the/an inlet aperture. Preferably, the header body comprises two outlet apertures on either side of the at least one inlet aperture.

When the cylindrical header body comprises outlet apertures on either side of the at least one inlet aperture, the oxidant dispatching device may comprise a first and a second rotatable shaft, whereby the first rotatable shaft is positioned along the cylinder axis on the one side of the at least one inlet aperture (e.g. on the left in the longitudinal direction), and the second rotatable shaft is positioned along the cylinder axis on the other side of the at least one inlet aperture (e.g. on the right in the longitudinal direction). At least one slide valve is mounted onto each of said first and second rotatable shafts so as to rotate around the cylinder axis together with the shaft onto which the slide valve is mounted. As explained above, each slide valve is positioned in a cylindrical section of the header body comprising a header outlet aperture, or more precisely in such a cylindrical section of that side of the header body in which the slide valve is mounted, each of said slide valves having an outer surface matching the inner surface of the cylindrical outer wall of the header body so that, by rotation of the rotatable shaft onto which the slide valve is mounted, the slide valve can be positioned over said header outlet aperture so as to partially or totally close off the outlet aperture with the slide valve's outer surface. Such an arrangement provides additional flexibility in that the header outlet apertures on one side of the at least one header inlet aperture can be partially or totally closed off independently of the header outlet apertures on the other side of the at least one header inlet aperture.

For reasons of safety, the one or more slide valves are preferably mounted onto the rotatable shaft or shafts so that not all of the outlet apertures can be completely closed off at the same time. In this manner, no dangerous pressure build-up within the header body can occur.

An inlet pipe is typically connected to the at least one header inlet aperture. Said inlet pipe typically has a longitudinal axis. For even distribution of the oxidant in the header body, the longitudinal axis of the inlet pipe is preferably located in a plane perpendicular to the longitudinal direction of said cylindrical header body which plane intersects the cylinder axis of the header body in the middle. The longitudinal axis of the inlet pipe preferably itself intersects the cylinder axis of the header body. The inlet pipe is advantageously flanged so as to permit easy and safe connection to an oxidant supply line.

Similarly, an outlet pipe is normally connected to each header outlet aperture, said outlet pipes usually having a longitudinal axis. The longitudinal axes of the individual outlet pipes are preferably located in a plane perpendicular to the longitudinal direction of the cylindrical header body. Said longitudinal axes of the outlet pipes preferably intersect the cylinder axis of the header body. The outlet pipes are usefully flanged.

For many industrial processes, only limited space is available for the oxidant dispatching device, in which case it may be advantageous for the longitudinal axes of the respective outlet pipes to be coplanar. When the axes are coplanar axes which intersect the cylinder axis, the cylinder axis and the axes of the outlet pipes are located in the same plane. The axes of the outlet pipes may in particular all be positioned on the same side with respect to the axis of the header body (e.g. upwards, downwards, to the left or to the right of the header body), in particular when they are coplanar. The longitudinal axis of the at least one inlet pipe may lie in the plane of the longitudinal axes of the outlet pipes. (The) At least one inlet pipe may be positioned on the same side of the axis of the header body as the outlet pipes or on the opposite side of the axis of the header body. In many instances, in particular when the available space is limited, it may be more convenient when the layout is such that the longitudinal axis of (the) at least one inlet pipe does not lie in the plane of the inlet axes of the outlet pipes, but forms an angle therewith (for example: a downward inlet pipe towards the header body and horizontal outlet pipes towards one or more burners).

In order to limit the impact of the incoming oxidant flow on the inner wall of the cylindrical header body, the inner diameter Dh of the cylindrical header body is preferably not less than half the inner diameter Di of the at least one oxidant inlet pipe, preferably not less than 3/4 of the inner diameter Di of said at least one oxidant inlet. It has been observed that reducing the impact of the incoming oxidant flow on the inner wall of the cylindrical header body is an important safety issue when the oxidant to be distributed is an oxygen-rich oxidant or oxygen and even more so when the oxidant is a preheated oxygen-rich oxidant or oxygen.

In order to limit the impact of the incoming oxidant flow on the inner wall of the cylindrical header body, the cylindrical header body can advantageously be provided with an outwardly extending buffer volume opposite the at least one oxidant inlet aperture. Such an outwardly extending buffer volume creates a so-called "dead" zone opposite the corresponding oxidant inlet. When such a buffer volume is present, it preferably comprises coupling means which make it possible to connect said buffer volume to a gas supply. Such coupling means may, for example, comprise a flange for connecting a gas supply line thereto. In this manner, when there is a problem with the regular oxidant supply, the buffer volume can be connected to a different or emergency, oxidant supply so that the oxidant flow to the downstream process can be rapidly resumed or need not be interrupted. For example, when, in normal use, the oxidant to be distributed is oxygen supplied by an air separation unit, the buffer volume can be used to provide the dispatching device with oxygen from an oxygen tank during maintenance of the air separation unit. Likewise, when, in normal use, the oxidant to be distributed is an oxidant preheated by an upstream oxidant preheater, the buffer volume can be used temporarily to supply ambient oxidant, typically ambient air, during maintenance or repair work to the oxidant preheater. The buffer volume can also be used for purging the oxidant dispatching device, in which case the coupling means are used to connect the buffer volume to a purge gas supply.

The oxidant dispatching device according to the present invention thus not only reliably and safely enables an incoming flow of preheated oxygen-rich oxidant to be divided into several outgoing flows of preheated oxygen-rich oxidant, but also makes it possible to vary the distribution of said preheated oxygen-rich oxidant over the various outgoing flows.

The only opening in the oxidant dispatching device, other than the oxidant inlet aperture(s) and the oxidant outlet aperture(s) is the opening (hereafter referred to as "lateral opening") in the lateral wall of the header body through which the rotatable shaft penetrates into the header body.

This lateral opening therefore constitutes the only possible opening through which preheated oxidant could leak from the dispatching device into the environment.

In order to minimize the risk of such an oxidant leak, the dispatching device can be provided with an isolation chamber connected to the cylindrical header body and surrounding part of the rotatable shaft as it extends outside the header body. Said isolation chamber can thus, for example, surround the rotatable shaft between the header body and the shaft handle.

The isolation chamber is advantageously equipped with a spring which acts to help maintain the rotatable shaft, and therefore also the one or more slide valves mounted on said axis, in the correct longitudinal position within the header body. This spring can be located within the isolation chamber on the side opposite the header body or outside the isolation chamber.

In general, a non-metallic seal can be used to create a gas seal around the rotatable shaft as it leaves the isolation chamber on the side of the isolation chamber opposite the header body.

When the dispatching device of the invention is used for the distribution of preheated oxidant, and even more so when it is used for the distribution of preheated oxygen-rich oxidant, a non-metallic seal is normally not suitable for sealing off the lateral opening of the header body through which the rotatable shaft penetrates into the header body.

According to an embodiment of the invention, it is proposed to equip the despatching device with a metallic gas seal for said lateral opening. Advantageously, the isolation chamber is provided with an abutment surrounding the lateral opening, for example in the form of a metallic ring extending into the isolation chamber around said lateral opening. Furthermore, a flexible metal sheet in oxidation resistant metal is provided which fits tightly around the rotatable shaft and which is pushed against the abutment by the above-mentioned spring, thereby creating a metallic gas seal, while still allowing rotation of the rotatable shaft.

As the shaft is a rotatable shaft, there will always be a gap and therefore a potential gas passage between the shaft and the surrounding walls of the isolation chamber. According to an embodiment of the invention, the risk of oxidant leaking from the dispatching device into the environment can also be reduced by physically restricting any flow of oxidant from the lateral opening of the header body to the side of the isolation chamber opposite the header body. This can for example be achieved by creating a long and narrow flow bath therebetween, such as a narrow meandering or maze-like flow-path.

The present invention also relates to an oxidant dispatching assembly comprising an oxidant source, an oxidant dispatching device according to any one of the above-described embodiments, and at least two oxidant dispatch lines. The oxidant source is in fluid connection with at least one header inlet aperture and each oxidant dispatch line is in fluid connection with a header outlet aperture. Preferably, each header outlet aperture is in fluid connection with an oxidant dispatch line.

The oxidant source can, for example, be an air blower, an oxygen tank or an air separation unit.

When the oxidant dispatching device has an inlet pipe connected to the header inlet aperture, the oxidant source is connected to said inlet pipe, for example by means of the flange of said inlet pipe.

The oxidant source can be directly or indirectly connected to the header inlet aperture or the corresponding inlet pipe. An example of an indirect fluid connection between the oxidant source and the header inlet aperture or pipe is the case whereby an oxidant preheater is present between the oxidant source and the header inlet aperture or pipe, so that the oxidant preheater receives oxidant from the oxidant source and so that the preheater preheats said oxidant and supplies the preheated oxidant to the oxidant dispatching device via the header inlet aperture.

When the oxidant dispatching device is equipped with outlet pipes connected to the outlet apertures, each oxidant dispatch line is connected to an oxidant outlet pipe, for example by means of the flange of said outlet pipe. The oxidant dispatch lines are advantageously flexible pipes.

The present invention also relates to an oxidant preheating and dispatching assembly. The oxidant preheating and dispatching assembly comprises an oxidant dispatching device according to any one of the embodiments described above and an oxidant preheater for preheating oxidant.

The oxidant preheater of the assembly comprises an inlet for oxidant to be preheated and an outlet for preheated oxidant, the outlet of the oxidant preheater being in fluid connection with at least one header inlet aperture of the oxidant dispatching device.

When an inlet pipe is connected to said header inlet aperture, the outlet of the oxidant preheater is connected to said inlet pipe, for example by means of the flange of said inlet pipe.

Preferred oxidant preheaters are described in US-A-6071116, EP-A-1819978, EP-A-1920192 and WO2008/141939.

The invention further relates to a first type of burner assembly which comprises an oxidant dispatching device according to any one of the embodiments described hereabove, and a burner having multiple oxidant passages. At least two of the burner oxidant passages are in fluid connection with a header outlet aperture of the oxidant dispatching device.

The invention also relates to a second type of burner assembly, the second type comprising an oxidant dispatching device according to any one of the embodiments described hereabove, and a set of burners, each burner of said set having at least one oxidant passage. Each burner of the set has at least one oxidant passage in fluid connection with a header outlet aperture of the oxidant dispatching device. When the burners of the set of burners have multiple oxidant passages, one or more of said passages of each burner can be in fluid connection with a header outlet aperture of the oxidant dispatching device.

When the oxidant dispatch device comprises outlet pipes which are connected to those header outlet apertures which are in fluid connection with a burner oxidant passage, said header outlet apertures are in fluid connection with the burner oxidant passage via the corresponding outlet pipes. In particular, said outlet apertures may be in fluid connection with the burner oxidant passage inlet via a dispatch line attached to said outlet pipe and in particular attached to the flange of said outlet pipe, when the outlet pipe is equipped with a flange. The dispatch lines are advantageously flexible dispatch lines. Thus, the above burner assemblies advantageously comprise an oxidant dispatching assembly as described above.

When the burner or burners of the burner assemblies as described above are to be supplied with preheated oxidant, the burner assembly advantageously includes an oxidant preheater for preheating the oxidant. Thus, in that case, the above burner assemblies advantageously comprise an oxidant preheating and dispatching assembly as described above.

The burner or burners of a burner assembly of the invention may be mounted in a furnace, such as a melting furnace or a tunnel furnace. Burner assemblies of the first type are particularly suited for such use, including burner assemblies corresponding to both the first and second type, i.e. burner assemblies comprising a set of burners, each burner having multiple oxidant passages. The burner or burners may also be mounted in a boiler, in particular when the burner assembly is of the second type.

The present invention thus also includes the use of a burner assembly according to any one of the embodiments described above for supplying thermal energy to a furnace or a boiler and furnaces or boilers equipped with a burner assembly of the invention.

The present invention and the benefits it provides are illustrated in the following example, reference being made to figures 1 to 4: whereby:
- Figure 1 is a schematic representation of a burner assembly according to the invention comprising an Alglass^{™} SUN burner developed by the applicants.
- Figure 2 represents a schematic elevation perspective view of the oxidant dispatching device shown in figure 1
- Figure 3 represents a schematic cross section along plane A-A of the dispatching device of figure 2 and
- Figure 4 represents a schematic side view of the oxidant dispatching device of figures 1 to 3
- Figure 5 represents a schematic cross section of an isolation chamber connected to a cylindrical header body.

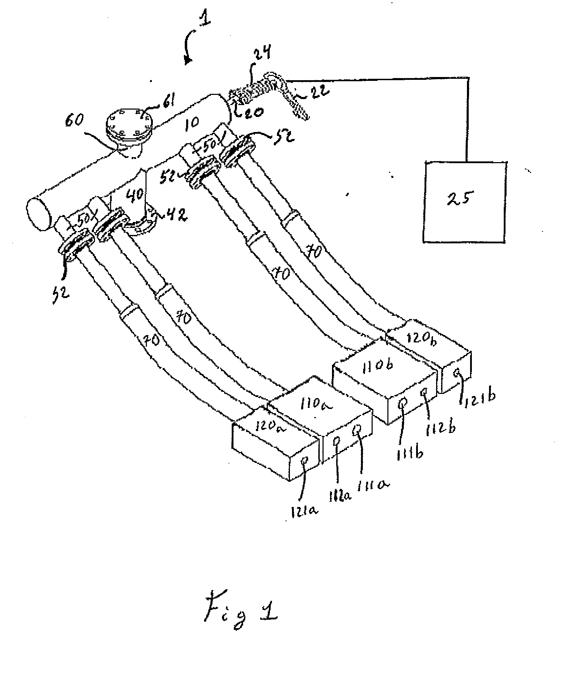

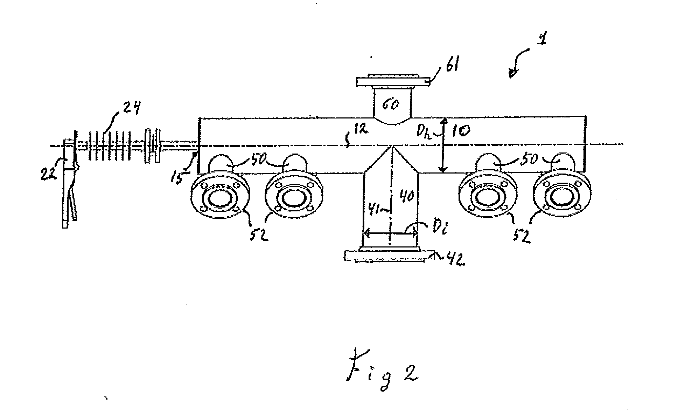

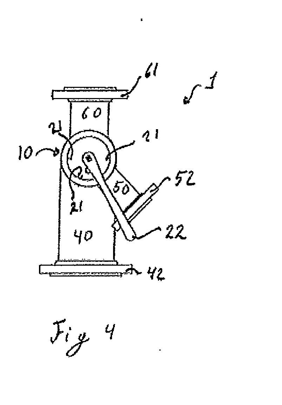

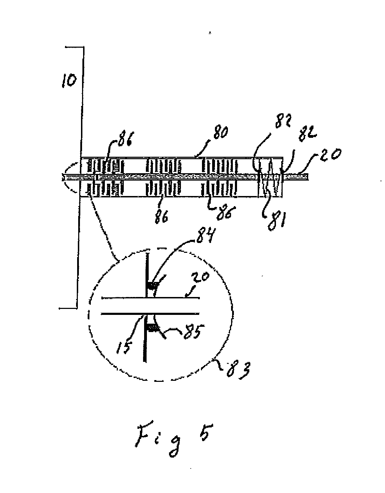

Table 1 below lists the reference signs used in figures 1 to 5.

**Table 1**

| | |
|---|---|
| 1 | Oxidant dispatching device |
| 10 | Cylindrical header body |
| 11 | Cylindrical outer wall of 10 |
| 12 | Cylinder axis |
| 13 | Oxidant inlet aperture |
| 14 | Oxidant outlet aperture |
| 15 | Lateral opening of 10 |
| 20 | Rotatable shaft |
| 21 | Rest position of 20 |
| 22 | Handle |
| 23 | Thermal insulation of 20 |
| 24 | Cooling fins of 20 |
| 25 | Control device for automatic rotation of 20 |
| 30 | Slide valve |
| 31 | Outer surface of 30 |
| 32 | Calibrated opening in 31 |
| 40 | Inlet pipe |
| 41 | Longitudinal axis of 40 |
| 42 | Flange of 40 |
| 50 | Outlet pipe |
| 51 | Longitudinal axis of 50 |
| 52 | Flange of 50 |
| 60 | Buffer volume |
| 61 | Coupling means of 60 |
| 70 | Oxidant dispatch lines |
| 80 | Isolation chamber |
| 81 | Spring |
| 82 | Non-metallic seal |
| 83 | Metallic seal |
| 84 | Abutment |
| 85 | Metal sheet |
| 86 | Meandering passage |
| 100 | Burner |
| 110a, 110b, 110c, 110d | Burner block |
| 111a, 111b | Primary passage in 110a, 110b |
| 112a, 112b | Secondary passage in 110a, 110b |
| 120a, 120b | Burner block |
| 121a, 121b | Tertiary passage in 120a, 120b |
| 200 | Combustion zone |
| L | Length of 10 |
| Dh | Inner diameter of 10 |
| Di | Inner diameter of 40 |

In the burner assembly illustrated in figure 1, industrial oxygen, having an oxygen content of at least 90%vol is supplied to an Alglass^{™} SUN burner 100.

Typical of the Alglass^{™} SUN burner 100 is that it allows stable combustion with a high level of oxidant staging, whereby oxidant staging is achieved by controlling the oxidant flow rate to the secondary and tertiary oxidant passage.

The Alglass^{™} SUN burner 100 shown in figure 1 comprises 4 refractory burner blocks which are mounted in mirror symmetry in a furnace wall (not shown). Blocks 110a and 110b each comprise a primary passage 111a and 111b through which primary oxidant and fuel are injected into combustion zone 200. Thereto, primary oxidant passages 111a&b are both connected to a fuel source (not shown) and a primary oxidant source (not shown). The primary oxidant is, for example air at ambient temperature. Blocks 110a and 110b further comprise a secondary passage 112a and 112b through which secondary oxidant is injected into combustion zone 200. The Alglass^{™} SUN burner 100 further comprises blocks 120a and 120b, each comprising a tertiary passage 121a and 121b through which tertiary oxidant is injected into combustion zone 200.

The Alglass^{™} SUN burner 100 has been proven to be particularly useful and advantageous for the staged combustion of oxygen-rich oxidant and oxygen and in particular for the staged combustion of preheated oxygen-rich oxidant and preheated oxygen.

In the burner assembly illustrated in figure 1, the oxygen is preheated to a temperature of at least 550°C in an indirect heat exchanger (not shown) upstream of the oxidant dispatching device 1.

The oxidant dispatching device 1 is used to divide the preheated oxygen into up to four preheated oxygen flows to be supplied to burner 100.

The preheated oxygen enters the dispatching device 1 through flanged inlet pipe 40, passes through inlet aperture 13 and flows into cylindrical header body 10. From the cylindrical header body 10 the preheated oxidant is distributed over the four outlet apertures 14 and therefrom, via the flanged outlet pipes 50 to the four flexible oxidant dispatch lines70 and ultimately to the secondary and tertiary oxidant passages 112a, 112b respectively 121a, 121b of burner 100.

Header body is generally embedded in thermal insulation (not shown) for safety reasons and to limit heat loss to the environment.

The materials out of which the oxidant dispatching device (including the slide valves), the oxidant dispatch lines and the burner are made are selected for their compatibility with the composition of the oxidant, the temperature of the oxidant, the temperatures and atmosphere in the combustion zone, etc.

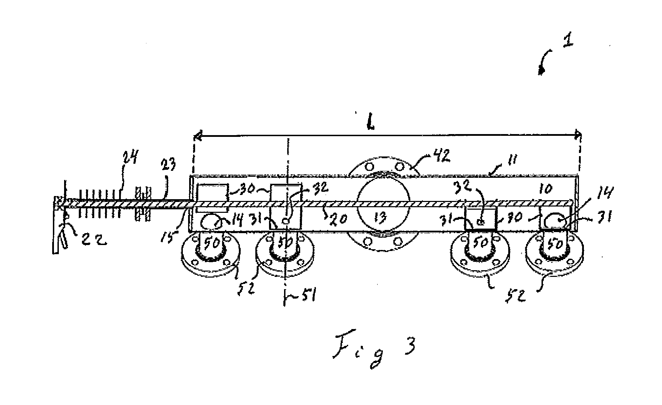

By rotating the rotatable shaft 20, the position of slide valves 30 and therefore also the position of the outer surface 31 of said slide valves with respect to the corresponding outlet apertures 14 is changed from:
- Totally closing off said outlet aperture (not shown in figure 3
- Partially closing off said outlet aperture (as shown for the two inner outlet apertures in figure 3)
- Not closing off said outlet aperture at all (as shown for the outermost outlet apertures in figure 3)

When the outer surface 31 of the slide valve contains multiple openings 32, for example openings of different diameters, the degree to which the corresponding outlet aperture 14 is closed off can be varied. In the case of slide valves 30 having an outer surface 31 in the form of a cylinder segment (as is shown in figure 3), the degree to which the corresponding outlet aperture 14 is closed off can also be varied by varying the degree to which the outer surface 31 of the slide valve 30 overlaps the outlet aperture.

In some instances, for example with a view to restricting friction between the inner surface of the header body 10 and the outer surface 31 of the slide valve 30, a small gap may exist between said outer and inner surface so that a small flow of oxidant may still flow through the outlet aperture even when said aperture is totally closed off by the slide valve. As a rule, this is not a problem, as the small flow of oxidant does not escape from the burner assembly, but is directed to the 'inactive' oxidant passage and therefrom to the combustion zone. Furthermore, a small flow of oxidant to the 'inactive' passage provides some cooling to the passage and can help prevent deposits of volatile matter from the combustion zone in the passage.

By an appropriate design of the oxidant dispatching device, the following preheated oxygen distributions can, for example be realized :
- distribution "50%" means that 50% of the total oxidant flow to the secondary and tertiary passages 112a&b and 121a&b flows is supplied to tertiary passages 121a&b. This mode obviously means that there is the same flow rate in each header outlet,
- the distribution "75%" means that 75% of the total oxygen flows through the tertiary passages 121a&b oxygen, whereas 25% flows through the secondary oxidant passages 112a&b (the configuration for this more highly staged combustion is illustrated in figure 3).

Other possibilities are
- asymmetric distribution whereby the greater fraction of the total oxidant flow is directed to one side of the burner (i.e. to either passages 112a and 121a or 112b and 121b), thereby creating an asymmetric flame in the combustion zone,
- pulsed distribution whereby the greater fraction of the total oxidant flow or even the total oxidant flow is alternately directed to one and then to the other side of the burner, thereby creating pulsed combustion in the combustion zone,
- etc.

When the burner assembly comprises a set of burners, the oxidant dispatching device can be used to vary the oxidant supply to the individual burners in function of whether the individual burner is active or inactive at a given stage of the combustion process in the furnace or boiler and/or depending on the power to be generated by the individual burner at the given stage of the process.

The following advantages of the present invention will be apparent to the skilled person, notably in the light of the above examples:
- possibility to change the oxidant distribution, including in the case of preheated oxygen, without any dismantling of the oxidant supply system
- possibility to change the oxidant distribution, including in the case of preheated oxygen, reliably and safely during uninterrupted downstream burner and furnace/boiler operation,
- limited space requirements,
no oxidant leakage.

## Claims

1. Oxidant dispatching device (1) comprising :
- a cylindrical header body (10) having a cylindrical outer wall (11) and defining a cylinder axis (12) in the longitudinal direction of the header body, the header body having a length L measured along the cylinder axis (12), the cylindrical outer wall (11) comprising, at different positions in the longitudinal direction of the header body 10):
i. at least one oxidant inlet aperture (13) and
ii. at least two spaced apart oxidant outlet apertures (14),
- a rotatable shaft (20) positioned along the cylinder axis (12),
- at least one slide valve (30) mounted onto said rotatable shaft (20) so as to rotate with the shaft (20) around the cylinder axis (12), said slide valve (30):
i. being positioned in a cylindrical section of the header body (10) comprising an oxidant outlet aperture (14) in the cylindrical outer wall (11), and
ii. having an outer surface matching the inner surface of the cylindrical outer wall (11),
whereby, by rotation of the rotatable shaft (20), said slide valve (30) can be positioned over said oxidant outlet aperture (14) so as to partially or totally close off said oxidant outlet aperture (30) with the outer surface (31) of said slide valve (30).

2. Oxidant dispatching device (1) according to claim 1, comprising a multitude of slide valves (30).

3. Oxidant dispatching device according to any one of the preceding claims, whereby the rotatable shaft (20) has a number of predetermined axial rest positions.

4. Oxidant dispatching device according to any one of the preceding claims whereby the outer surface (31) of the at least one slide valve (30) is corresponds to a cylinder segment.

5. Oxidant dispatching device (1) according to any one of the preceding claims, whereby the outer surface (31) of at least one of the slide valves (30) has one or more calibrated openings (32) for partially closing off one of the oxidant outlet apertures (14) when said calibrated opening (32) is positioned over said oxidant outlet aperture (14).

6. Oxidant dispatching device (1) according to any one of the preceding claims, whereby the header body (10) is symmetrical with respect to a symmetry plane perpendicular to the cylinder axis (12).

7. Oxidant dispatching device (1) according to any one of the preceding claims, having a single oxidant inlet aperture (13) which is positioned in the middle of the header body (10) measured in the longitudinal direction of the header body (10).

8. Oxidant dispatching device (1) according to any one of the preceding claims, whereby the cylindrical header body (10) is provided with an outwardly extending buffer volume (60) opposite the at least one oxidant inlet aperture (13).

9. Oxidant dispatching device (1) according to claim 8, whereby said buffer volume (60) comprises coupling means for connecting said buffer volume (60) to a gas supply.

10. Oxidant dispatching assembly comprising: an oxidant source, an oxidant dispatching device according to any one of the preceding claims, and at least two oxidant dispatch lines (70), whereby the oxidant source is in fluid connection with at least one oxidant inlet aperture (13) and each oxidant dispatch line (70) is in fluid connection with one header outlet aperture (14).

11. Oxidant preheating and dispatching assembly comprising an oxidant preheater and an oxidant dispatching device (1) according to any one of claims 1 to 9, whereby the oxidant preheater comprises an inlet for oxidant to be preheated and an outlet for preheated oxidant which is in fluid connection with at least one oxidant inlet aperture (13) of the header body (10).

12. Burner assembly comprising an oxidant dispatching device (1) according to any one of claims 1 to 9 and a burner (100) having multiple oxidant passages (112a, 112b, 121a, 121b) in fluid connection with an outlet aperture (14) of the header body (10).

13. Burner assembly comprising an oxidant dispatching device (1) according to any one of claims 1 to 9 and a set of burners, each burner of the set having at least one oxidant passage in fluid connection with an oxidant outlet apertures (14) of the header body (10).

14. Furnace comprising a combustion zone 200 and a burner assembly according to claim 12 or 13, whereby the burner or burners (100) of the burner assembly are mounted in a furnace wall so that the oxidant passages (112a, 112b, 121a, 121b) of said burner or burners (100) terminate in the combustion zone (200).

15. Furnace comprising a combustion zone 200 and a burner assembly according to claim 12 or 13, whereby the burner or burners (100) of the burner assembly are mounted in a furnace wall so that the oxidant passages (112a, 112b, 121a, 121b) of said burner or burners (100) terminate in the combustion zone (200).
